# Europäisches Patentamt
# European Patent Office
# Office européen des brevets

(19)

(11) Veröffentlichungsnummer: **0 247 239**
**B1**

(12) ## EUROPÄISCHE PATENTSCHRIFT

(45) Veröffentlichungstag der Patentschrift: **12.09.90**

(51) Int. Cl.⁵: **B 62 D 29/04**

(21) Anmeldenummer: **86117205.4**

(22) Anmeldetag: **10.12.86**

(54) Wärmebeständiges, leicht und dauerhaft lackierbares Leichtbauteil, insbesondere für die Fahrzeugindustrie.

(30) Priorität: **12.12.85 DE 3543895**

(43) Veröffentlichungstag der Anmeldung:
**02.12.87 Patentblatt 87/49**

(45) Bekanntmachung des Hinweises auf die Patenterteilung:
**12.09.90 Patentblatt 90/37**

(84) Benannte Vertragsstaaten:
**AT BE CH DE ES FR GB GR IT LI LU NL SE**

(56) Entgegenhaltungen:
DE-A-2 918 079
DE-A-3 011 336
DE-A-3 036 430

PATENT ABSTRACTS OF JAPAN, Band 8, Nr. 154 (M-130)1591r, 18. Juli 1984; & JP - A - 59 50870 (TOYO KOGYO) 24.03.1984

(73) Patentinhaber: **Thyssen Stahl Aktiengesellschaft**
**Kaiser-Wilhelm-Strasse 100**
**D-4100 Duisburg 11 (DE)**

(72) Erfinder: **Blümel, Klaus**
**Brunhildenweg 17**
**D-4220 Dinslaken (DE)**
Erfinder: **Prange, Wilfried**
**Wilmastrasse 63**
**D-4220 Dinslaken (DE)**
Erfinder: **Petersen, Peter**
**Teutonenstrasse 6**
**D-8902 Neusäss-Steppach (DE)**

(74) Vertreter: **Redies, Bernd, Dr. rer. nat. et al**
**COHAUSZ & FLORACK Patentanwaltsbüro**
**Schumannstrasse 97 Postfach 14 01 20**
**D-4000 Düsseldorf 1 (DE)**

EP 0 247 239 B1

**Beschreibung**

Die Erfindung betrifft ein wärmebeständiges, ggf. geformtes Leichtbauteil, insbesondere für die Fahrzeugindustrie, wie die Automobilindustrie, mit mindestens auf einer Seite leicht und dauerhaft lackierbarer Oberfläche sowie ein Verfahren zur Herstellung eines solchen Bauteils.

In der Automobilindustrie spielt heute das Gewicht der Bauteile eine bedeutende Rolle. Außerdem muß ihre Form leicht in den heute üblichen, mit sehr kurzen Taktzeiten arbeitenden Automaten herstellbar sein. Aus diesem Grund hat man bereits Formteile aus glasfaserverstärktem Kunststoff, zum Beispiel Polyesterharz, hergestellt. Diese haben zwar ein geringes Gewicht und trotzdem hohe Stabilität. Eine einheitliche reproduzierbare Oberflächenfeingestalt, die hohen Lackieransprüchen genügt, läßt sich mit solchen Teilen aber nicht erreichen. Außerdem läßt sich die Oberfläche von Formteilen aus glasfaserverstärktem Kunststoff sehr schwer porenfrei herstellen. Auch halten derartige Formteile erhöhte Temperaturen nicht aus, wie sie beispielsweise beim Einbrennen von Fahrzeuglacken üblich sind (180-230°C).

Weiterhin ergibt sich aufgrund der oben erwähnten Oberflächenstruktur des Kunststoffes ein Unterschied zwischen einer Stahl- und einer Kunststoffoberfläche im Farbton und Lackglanz nach dem Lackieren, insbesondere bei der Elektrotauchlackierung, so daß es unmöglich ist, Bauteile aus Stahl einerseits und aus Kunststoff andererseits für höchste Ansprüche gleichzeitig und nebeneinander angeordnet zu grundieren und decklackieren. Das heißt, daß z.B. eine zusammengebaute Fahrzeugkarosserie mit Bauteilen aus Stahl einerseits und Bauteilen aus Kunststoff andererseits nicht insgesamt grundiert und decklackiert werden kann.

Ein weiterer Nachteil eines Bauteils aus reinem Kunststoff ist, daß zum Beispiel beim Einsatz eines solchen Teils in einem Automobil die Kunststoffteile sich bei einer Kollision des Fahrzeuges nur geringfügig zur Aufnahme kinetischer Energie eignen, sondern fast ohne Energieverzehr zerbrechen.

Sowohl der Gedanke, ein Kunststofformteil nachträglich metallisch zu beschichten oder ein vorgeformtes Blechteil mit Kunststoff zu verbinden, ist nicht neu. So ist beispielsweise ein Karosserieaußenhautteil aus Faserverbundstoff bekannt, bei welchem die zur sichtbaren Seite hin zeigenden Flächen mit einem 0,1 bis 1 mm starken Blech überzogen sind. Die Herstellung dieses Bauteils geschieht in der Weise, daß entweder das vorgeformte Blech mit einem vorgefertigten, aus Faserverbundwerkstoffen hergestellten Teil durch Kleben verbunden wird oder aber, daß das geformte Blech während des Preßvorganges für den Faserverbundwerkstoff unter Anwendung von Druck und Wärme mit diesem verbunden wird (DE-OS 30 11 336).

Die auf diese Weise bisher hergestellten Verbundteile haben aber den Nachteil, daß der Haftverbund zwischen Kunststoff und Blech für viele Anwendungsfälle nicht ausreichend ist. Es hat sich nämlich gezeigt, daß bei Anwendung erhöhter Temperaturen, wie sie bei der Weiterverarbeitung oder im Einsatz der Bauteile auftreten können, die bisher verwendeten Klebstoffe und Haftvermittler erweicht oder zerstört werden, so daß der Haftverbund verlorengeht. Aus diesem Grund konnten in dieser Weise hergestellte Verbundteile, beispielsweise bisher in der Automobilindustrie, nicht eingesetzt werden, da bei den dort üblichen Lackierverfahren der Lack bei erhöhter Temperatur eingebrannt wird. Weiterhin waren die bisher verwendeten Haftvermittler nicht geeignet, die Temperaturwechselbelastungen von −40 bis +160°C, denen eine Automobilkarosserie im Einsatz ausgesetzt sein kann, ohne Störung des Haftverbundes auszuhalten.

Sofern das Bauteil durch Verpressen eines faserverstärkten Kunststoffes mit dem Blechteil hergestellt ist, ist der Haftverbund auch durch Korrosion gefährdet. Die eingesetzten Kunststoffe sind, bedingt durch die in der Kunststoffmasse eingelagerten Fasern, nicht vollkommen dampfdicht, so daß durch den Kunststoff Wasser bis in die Grenzschicht Blech/Kunststoff vordringen kann und dort zu Korrosionserscheinungen, dem Durchrosten des Bleches und/oder zur Zerstörung des Haftverbundes führen kann.

Der Erfindung liegt nun die Aufgabe zugrunde, ein Leichtbauteil anzugeben, welches das leichte Gewicht der Bauteile aus Kunststoff hat, leicht und dauerhaft lackierbar ist sowie höheren Temperaturen — z.B. übliche Lackeinbrenntemperaturen von 180 - 230°C — bei der Verarbeitung und im Einsatz standhält. Darüberhinaus ist es Aufgabe der Erfindung, ein Verfahren anzugeben, mit welchem ein derartiges Bauteil trotz komplizierter Formgebung einfach herstellbar ist und bei welchem der Verbund zwischen Blech und Kunststoff sicher gewährleistet ist, und zwar derart, daß auch bei Verwendung von Bauteilen aus Stahl einerseits und den erfindungsgemäßen Leichtbauteilen andererseits eine einheitliche Lackierung z.B. eines gesamten Fahrzeuges mit einheitlichem Aussehen erhalten wird.

Diese Aufgabe wird durch ein Bauteil aus einem faserverstärkten Kunststoffkern, dessen zu den sichtbaren Seiten zeigende Flächen mit einem bis zu 1 mm dicken Blech überzogen sind, wobei zwischen Kunststoffkern und Blech eine haftungserhöhende Schicht vorhanden ist, gelöst, bei welchem die zwischen Blech und Kunststoffkern angeordnete hafterhöhende Schicht eine 5 bis 30 μm insbesondere 10 bis 20 μm dicke, auf das Blech aufgetragene und vernetzte Schicht eines Polyester-, Epoxyd- oder Polyurethanlackes ist.

Die erfindungsgemäß verwendeten Polyester-, Epoxyd- und Polyurethanlacke besitzen sowohl gute Hafteigenschaften zum Blech als auch zu der im Verbundteil anliegenden artverwandten Kunststoffschicht. Darüber hinaus bilden diese Lacke einen sicheren Korrosionsschutz für das Blech, da sie, sofern sie in ausreichender Dicke aufgetragen werden, eine für korrosive Medien, wie Wasserdampf, undurchdringliche Schicht bilden. Selbst bei Verwendung von glasfaserverstärktem Kunststoff, der von Hause aus wasserdampfdurchlässig sein kann, kommt es nicht zur Korrosion des Stahlbleches und zur Zerstörung des Haftverbundes.

Für die Herstellung des erfindungsgemäßen Leichtbauteils wird vorzugsweise ein Stahlblech verwendet, das erheblich dünner als die üblicherweise für den gleichen Verwendungszweck angewendeten Stahlbleche ist, nämlich 0,2 bis 0,5 mm, vorzugsweise 0,2 bis 0,4 mm, insbesondere 0,3 mm. Bevorzugt wird ein Stahlfeinblech verwendet mit metallischer Oberflächenveredelung (zum Beispiel Verzinkung).

Zur Verbesserung der Korrosionsbeständigkeit ist es von Vorteil, das Bauteil derart zu gestalten, daß das Feinblech am Kunststoffkern dicht anliegt und diesen derart umhüllt, daß lediglich eine Oberfläche frei bleibt und ferner die freien Schnittkanten des Blechteils derart zum Inneren des Kunststoffkern gebogen werden, daß sie nach dem Preßvorgang mit Kunststoff umhüllt sind.

Gemäß der Erfindung wird für den Kunststoffkern vorzugsweise ein Duroplastkunststoff bzw. ein Produkt auf der Basis eines oder mehrerer wärmehärtbarer Polyester- oder Polyurethanharze bzw. deren Vorprodukte verwendet, die beim Einpressen der mit Duroplastvorprodukt getränkten Matten oder Lagen durch Erwärmung in Duroplast umgesetzt werden. Bevorzugt werden bei der Herstellung der Duroplaste solche Harze bzw. Harzvorprodukte, welche Duroplastprodukte ergeben, die einen solchen Wärmeausdehnungskoeffizienten haben, daß er mit dem des Bleches in dem Temperaturbereich der Weiterverarbeitung und Anwendung weitgehend übereinstimmt. Derartige Produkte sind zum Beispiel die als SMC-Kunststoff bekannten Produkte, wie sie in der DE-OS 30 36 430 beschrieben sind.

Die Kunststoffe werden in Form von Fasermatten, insbesondere als Matten mit Glasfasern eingesetzt, wie sie bei der Herstellung von faserverstärkten Kunststoffen an sich üblich sind.

Das Verfahren zur Herstellung eines solchen Leichtbauteils besteht aus den im Anspruch 3 angegebenen Verfahrensschritten, d.h.

a) Ein Blech oder Blechband aus gut verformbarem Material, vorzugsweise ein tiefziehfähiges Feinblech, insbesondere mit einer Dicke von 0,2 bis 0,5 mm, wird auf mindestens einer Seite mit einer Schicht aus einem Polyester-, Epoxyd- oder Polyurethanlack beschichtet.

b) Der auf das Blech oder Blechband aufgetragene Kunststoff wird durch eine Wärmebehandlung (Einbrennen) vernetzt und getrocknet.

c) Das kunststoffbeschichtete Blech oder Blechband wird, nach Verschneiden des Blechbandes zu Abschnitten geeigneter Größe, durch Tiefziehen, insbesondere unter Schaffung von Seitenflächen und umgreifenden Umbiegungen, an den den Seitenflächen benachbarten, der Hauptfläche gegenüberliegenden Teilen verformt.

d) In das so gebildete geformte Blechteil werden eine oder mehrere mit wärmehärtbarem Duroplastvorprodukt getränkte Fasermatten oder mehrere Lagen solcher Matten eingelegt.

e) Die Lagen aus Duroplastvorprodukten werden unter Erwärmung in dem geformten Blechteil gepreßt, wobei die Duroplastvorprodukte in Duroplaste umgewandelt und ausgehärtet werden.

Bei dem Verfahren ist es wesentlich, daß die Schicht aus einem Polyester-, Epoxyd- oder Polyurethanlack auf das unverformte Feinblech aufgegeben wird und die Kunststoffschicht in einer nachfolgenden Wärmebehandlungsstufe vernetzt und getrocknet wird. Durch diese Verfahrensschritte wird eine Kunststoffbeschichtung auf dem Blech hergestellt, die absolut undurchlässig für korrosive Medien ist und einen ausgezeichneten Haftverbund zwischen Kunststoff und Metall gewährleistet. Darüberhinaus ist eine solche Schicht in besonders einfacher Weise, zum Beispiel durch Bandbeschichtung (Coilcoating-Verfahren), herstellbar und schützt das Feinblech darüberhinaus während des Transportes und des Handlings bei den nächsten Verarbeitungsschritten vor Beschädigung und Korrosion. Mit Polyester-, Epoxyd- und Polyurethanlacken beschichtete Bleche lassen sich problemlos durch Tiefziehen auch zu komplizierter Gestalt verformen, so daß Bauteile beliebiger Form hergestellt werden können. Erfindungsgemäß werden bevorzugt Polyester-, Epoxyd- bzw. Polyurethanschichten mit einer Dicke von 5 bis 30 µm, vorzugsweise 10 bis 20 µm, aufgetragen. Bei dieser Schichtdicke ist einerseits ein ausreichender Korrosionsschutz für das Blech gewährleistet, andererseits lassen sich derartige Schichten leicht umformen, ohne daß die Gefahr einer Rißbildung in den verformten Bereichen besteht.

Es ist besonders vorteilhaft, wenn gemäß einem weiteren Vorschlag der Erfindung die im Bereich der vom Blech unbedeckten Oberfläche angeordneten, mit Duroplastvorprodukt getränkten Fasermatten haftvermindert gegen die Oberfläche der Preßwerkzeuge ausgerüstet sind. Hierbei ist es ausreichend, wenn bei mehrlagigem Aufbau des Kunststoffkörpers die oberste, zum Preßwerkzeug weisende Schicht haftvermindert ausgerüstet ist. Eine Haftverminderung der Kunststoffmatte erreicht man durch bekannte Zusätze, beispielsweise Zinkstearat, zur Kunststoffmischung.

Das erfindungsgemäße Bauteil ist dadurch gekennzeichnet, daß durch seinen besonderen Aufbau ein Bauteil gegeben ist, der das leichte Gewicht und die Stabilität von Bauteilen aus faserverstärkten Kunststoffen hat und bei dem eine hohe Korrosionsschutzwirkung erreicht wird, wie sie z.B. durch die beim Fahrzeugbau heute übliche Grundierung erzielt wird, ohne daß dieser Verfahrensschritt bei der Fertigung der Fahrzeuge mit den erfindungsgemäßen Bauteilen durchgeführt werden muß. Das erfindungsgemäße Leichtbauteil mit seiner Oberfläche ist jeder normalen weiteren Weiterverarbeitung im Fahrzeugbau, d.h. Decklackierung und Lackeinbrennung zugänglich unter Bildung einer Lackschicht, die nicht nur eine ausgezeichnete Haftung an der Oberfläche des Bauteils hat, sondern auch unter Schlechtwetterbedingungen über die gesamte Fläche einschließlich Kanten dauerhaft dicht ist.

Das erfindungsgemäße Leichtbauteil hält auch die bei der Weiterverarbeitung üblichen erhöhten Temperaturen stand. Weiterhin hat das erfindungsgemäße Bauteil den fertigungstechnischen Vorteil, daß durch die Umhüllung des Kunststoffkernes mit einer derartigen Feinblechschicht er so umlaufend abgedeckt ist, daß die Bildung einer umlaufenden Schnittkante des umliegenden Bleches durch die bisher übliche gezackte Gestaltung zur Verhinderung einer möglichen Korrosionsgefahr von der Schnittkante ausgehend entfällt und ein Entgraten sowohl des Blechteiles wie auch des Verbundteiles unnötig ist.

Ganz wesentlich ist, daß die geformten Blechteile in Pressenstraßen mit den für Feinblech üblichen Taktzeiten hergestellt werden können und die so hergestellten geformten Blechteile ohne Korrosionsgefährdung zwischengelagert werden können. In einem separaten Arbeitsgang werden die geformten Blechteile sodann mit der faserverstärkten Kunstharzmasse aus Duroplastvorprodukt unter Bildung der Duroplasten in den dafür erforderlichen Pressenstraßen hinterpreßt, die den dem Kunststoff angepaßten Fertigungs- und Taktzeiten entsprechen. Die so hergestellten Leichtbauteile können, wie gesagt, auch bei den beim Einbrennen der Lacke angewandten üblichen erhöhten Temperaturen ohne weiteres eingesetzt und somit bisher eingesetzte Fertigungsstraßen in dieser Beziehung unverändert beibehalten werden.

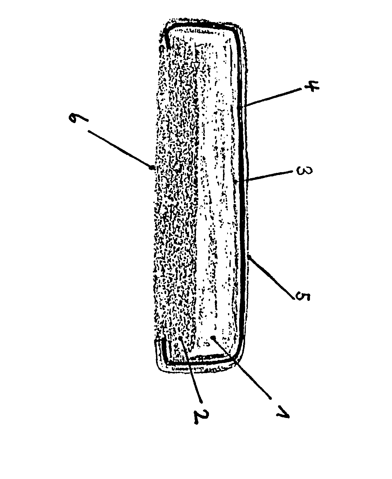

Die Erfindung wird in der beiliegenden Zeichnung erläutert, die das erfindungsgemäße Leichtbauteil in flächiger Ausfertigung (z.B. ähnlich einer Automobiltüre) im Querschnitt zeigt. Der Kunststoffkern aus faserverstärktem Duroplast mit den Schichten (1) und (2) ist umhüllt mit Feinblech (4) aus tiefziehbarem Material (z.B. Stahlfeinblech) mit einer Dicke von 0,2 bis 0,5 mm. Zwischen Kunststoffkern und Feinblech befindet sich über die gesamte Blechfläche eine dünne Schicht aus Polyester-, Epoxyd- und/oder Polyurethanlack (3). Eine Schicht (5) aus gleichem Material, ebenfalls über die ganze Fläche des Feinbleches, befindet sich auf der dem Kunststoffkern (1, 2) abgewandten, äußeren Seite des Bauteils. Die Schicht (2) auf der nicht mit Metall abgedeckten Seite (6) des Bauteils unterscheidet sich vom anderen Teil des Kunststoffkerns nur durch den Gehalt an z.B. Zinkstearat, so daß diese Seite (6) für die Oberfläche üblicher, auch hier verwendeter Preßwerkzeuge haftvermindernd ausgerüstet ist, so daß beim Pressen kein Kunststoffmaterial aus Preßwerkzeug haften bleibt.

Ausführungsbeispiel:

Ein beidseitig verzinktes Blech aus weichem, unlegiertem Stahl mit einer Dicke von 0,3 mm wurde in einer Bandbeschichtungsanlage nach üblicher Vorbehandlung durch Rollenbeschichtung mit einer 20 µm dicken Schicht aus Polyurethanlack (ABCC der Firma INMONT) einseitig beschichtet. In der nachfolgenden Wärmebehandlungsstufe wurde die Lackschicht bei einer Temperatur von 220°C getrocknet und der Kunststoff vernetzt. Das fertigbeschichtete Band wurde zu einem Coil gewickelt. Im nachfolgenden Verarbeitungsschritt wurde das beschichtete Band in Blechabschnitte geeigneter Größe zerteilt und unter Schaffung von Seitenflächen und umgreifenden Umbiegungen an den den Seitenflächen benachbarten, der Hauptfläche gegenüberliegenden Teilen zu einem wannenförmigen Blechteil durch Tiefziehen umgeformt. Danach wurde das Blechteil in eine Form eingelegt, und es wurden zwei Schichten mit Duroplastvorprodukt (SMC, Class A 2000 der Firma Budd Plastic, USA) getränkte, glasfaserverstärkte Matten eingelegt. Die Menge der eingelegten Kunststoffmatten wurde derart gewählt, daß ein Bauteil der gewünschten Dicke entstand. Als Deckschicht wurde eine Matte verwendet, bei welcher dem Duroplastvorprodukt Zinkstearat zur Haftverminderung beigegeben worden war. Das gesamte Bauteil wurde in einer Presse bei einer Temperatur von 150°C mit einem Druck von 11,5 N/mm² innerhalb von 1,5 min. verpreßt, wobei das Duroplastvorprodukt in Duroplast umgewandelt und vollkommen ausgehärtet wurde. Danach wurde das fertige Bauteil der Form entnommen. Eine weitere Nachbearbeitung war nicht mehr erforderlich. Es wurde ein Bauteil mit ausgezeichnetem Haftverbund zwischen Blech und Kunststoffkern erhalten.

**Patentansprüche**

1. Wärmebeständiges lackierbares Leichtbauteil, insbesondere für die Fahrzeugindustrie, bestehend aus einem faserverstärkten Kunststoffkern (1, 2), dessen zu den sichtbaren Seiten zeigende Flächen mit einem bis zu 1 mm dicken Blech (4) überzogen sind, wobei zwischen Kunststoffkern (1, 2) und Blech (4) eine haftungserhöhende Schicht (3) vorhanden ist, dadurch gekennzeichnet, daß die haftungserhöhende Schicht eine 5 bis 30 µm dicke, auf das Blech aufgetragene und vernetzte Schicht eines Polyester-, Epoxyd- oder Polyurethanlackes ist.

2. Wärmebeständiges lackierbares Leichtbauteil gemäß Anspruch 1, dadurch gekennzeichnet, daß die haftungserhöhende Schicht (3) eine Dicke von 10 bis 20 µm hat.

3. Verfahren zum Herstellen eines wärmebeständigen, dauerhaft lackierbaren Leichtbauteils, insbesondere für die Fahrzeugindustrie, gekennzeichnet durch die Kombination folgender Verfahrensschritte:

a) Ein Blech oder Blechband aus gut verformbarem Material, vorzugsweise ein tiefziehfähiges Feinblech, insbesondere mit einer Dicke von 0,2 bis 0,5 mm, wird auf mindestens einer Seite mit einer Schicht aus einem Polyester-, Epoxyd- oder Polyurethanlack beschichtet.

b) Der auf das Blech oder Blechband aufgetragene Kunststoff wird durch eine Wärmebehandlung (Einbrennen) vernetzt und getrocknet.

c) Das kunststoffbeschichtete Blech oder Blechband wird, nach Verschneiden des Blechbandes zu Abschnitten geeigneter Größe, durch Tiefziehen, insbesondere unter Schaffung von Seitenflächen und umgreifenden Umbiegungen, an den den Seitenflächen benachbarten, der Hauptfläche gegenüberliegenden Teilen verformt.

d) In das so gebildete geformte Blechteil werden eine oder mehrere mit wärmehärtbarem Duroplastvorprodukt getränkte Fasermatten oder mehrere Lagen solcher Matten eingelegt.

e) Die Lagen aus Duroplastvorprodukten werden unter Erwärmung in dem geformten Blechteil gepreßt, wobei die Duroplastvorprodukte in Duroplaste umgewandelt und ausgehärtet werden.

4. Verfahren nach Anspruch 3, dadurch gekennzeichnet, daß die Bleche oder Blechbänder mit einer Kunststoffschicht von 5 bis 30 µm insbesondere 10 bis 20 µm im Bandbeschichtungsverfahren (Coilcoating-Verfahren) beschichtet werden.

5. Verfahren nach Anspruch 3 und 4, dadurch gekennzeichnet, daß die im Bereich der vom Blech unbedeckten Oberfläche angeordneten, mit Duroplastvorprodukt getränkten Fasermatten haftungsvermindert gegen die Oberfläche der Preßwerkzeuge ausgerüstet sind.

## Revendications

1. Pièce de construction allégée thermostable pouvant être laquée, en particulier pour l'industrie automobile, constituée d'un noyau (1, 2) en matière synthétique renforcé par des fibres, dont les surfaces dirigées sur les côtés visibles sont recouvertes par une tôle (4) ayant jusqu'à 1 mm d'épaisseur, une couche (3) augmentant l'adhérence étant présente entre le noyau (1, 2) en matière synthétique et la tôle (4), caractérisée en ce que la couche augmentant l'adhérence est une couche d'une laque polyester, époxyde ou polyuréthane de 5 à 30 µm d'épaisseur appliquée sur la tôle et réticulée.

2. Pièce de construction allégée thermostable pouvant être laquée selon la revendication 1, caractérisée en ce que la couche (3) augmentant l'adhérence a une épaisseur de 10 à 20 µm.

3. Procédé pour la fabrication d'une pièce de construction allégée thermostable pouvant être laquée durablement, en particulier pour l'industrie automobile, caractérisé par la combinaison des étapes de procédé suivantes:

a) On recouvre une tôle ou un feuillard de tôle en matériau facilement déformable, de préférence en tôle mince apte à l'emboutissage profond, en particulier avec une épaisseur de 0,2 à 0,5 mm, au moins sur une face par une couche de laque polyester, époxyde ou polyuréthane;

b) On réticule et on sèche par un traitement thermique (cuisson) la matière synthétique déposée sur la tôle ou le feuillard de tôle;

c) On déforme la tôle ou le feuillard de tôle recouvert de matière synthétique, après découpage en sections de dimensions convenables, par emboutissage profond, en particulier en créant des faces latérales et des cintrages enveloppants, sur les parties adjacentes aux faces latérales et opposées à la surface principale;

d) On introduit dans la pièce en tôle conformée ainsi constituée un ou plusieurs mats de fibres imprégnés d'un pré-produit de résine thermodurcissable pouvant être durci par la chaleur, ou plusieurs couches de tels mats;

e) On comprime les couches de pré-produits de résine thermodurcissable par chauffage dans la pièce en tôle conformée, les pré-produits de résine thermodurcissable étant transformés en résines thermodurcissables et cuits.

4. Procédé selon la revendication 3, caractérisé en ce que les tôles ou feuillards de tôle sont recouverts par une couche de matière synthétique de 5 à 30 µm, en particulier de 10 à 20 µm, par un procédé de revêtement de feuillard (procédé de couchage sur bande).

5. Procédé selon les revendications 3 et 4, caractérisé en ce que les mats de fibres imprégnés de pré-produit de résine thermodurcissable qui sont disposés dans la région de la surface non recouverte par la tôle, sont apprêtés à adhérence réduite contre la surface de l'outil de presse.

## Claims

1. Heat-resistant varnishable lightweight component, in particular for the vehicle industry, consisting of a fibre-reinforced plastic core (1, 2), the surfaces of which facing the visible sides are covered by an up to 1 mm thick metal sheet (4), there being an adhesion-promoting layer (3) between the plastic core (1, 2) and metal sheet (4), characterized in that the adhesion-promoting layer is a 5 to 30 µm thick cured layer of a polyester, epoxy or polyurethane resin applied to the metal sheet.

2. Heat-resistant paintable lightweight component according to Claim 1, characterized in that the adhesion-promoting layer (3) has a thickness of 10 to 20 µm.

3. Process for producing a heat-resistant, durably varnishable lightweight component, in particular for the vehicle industry, characterized by the combination of following process steps:

a) A metal sheet or sheet metal strip of readily deformable material, preferably a deep-drawable thin sheet, in particular a thickness of 0.2 to 0.5 mm, is coated on at least one side with a layer of a polyester, epoxy or polyurethane resin.

b) The plastic applied to the metal sheet or sheet metal strip is cured and dried by a heat treatment (stoving).

c) The plastic-coated metal sheet or sheet metal strip, once the sheet metal strip has been cut into sections of suitable size, is deformed by deep drawing, in particular creating side surfaces and embracing bent-around portions, on the parts opposite the main surface and adjacent to the side surfaces.

d) One or more fibre mats impregnated with a heat-curable thermoset intermediate, or a plurality of layers of such mats, are placed in the shaped sheet metal part thus formed.

e) The layers of thermoset intermediates are compressed in the shaped sheet metal part while being heated, the thermoset intermediates being converted into thermosets and cured.

4. Process according to Claim 3, characterized in that the metal sheets or sheet metal strips are coated with a layer of plastic of 5 to 30 µm, in particular 10 to 20 µm, in a strip coating process (coil coating process).

5. Process according to Claims 3 and 4, characterized in that the fibre mats impregnated with thermoset intermediate which are arranged in the region of the surface not covered by the metal sheet are finished with an adhesion inhibitor with respect to the surface of the pressing tools.